# EUROPÄISCHE PATENTANMELDUNG

(11) **EP 3 863 137 A1**
(43) Veröffentlichungstag der Anmeldung: **11.08.2021**
(21) Anmeldenummer: 20156028.1
(22) Anmeldetag: 07.02.2020
(51) Int. Cl.: H02G 1/12

(54) **VERFAHREN UND VORRICHTUNG ZUM ENTFERNEN EINER ABSCHIRMUNG EINES KABELS**

(71) Anmelder: Rosenberger Hochfrequenztechnik GmbH & Co. KG, 83413 Fridolfing (DE)
(72) Erfinder: Steinigen, Oliver, 83413 Fridolfing (DE)
(74) Vertreter: Lorenz, Markus

(57) **Zusammenfassung**

Die Erfindung betrifft ein Verfahren zum Entfernen einer Abschirmung 1 eines Kabels 2, wonach ein Schneidwerkzeug 7 an eine Außenfläche der Abschirmung 1 in eine Schnittposition zugestellt wird. Vorgesehen ist, dass ein gasförmiges Medium in das Kabel 2 eingeblasen wird, um die Abschirmung 1 mit einer radial nach außen wirkenden Kraft zu beaufschlagen derart, dass die Abschirmung 1 von wenigstens einer Schneide 8 des Schneidwerkzeugs 7 eingeschnitten wird.

## Beschreibung

Die Erfindung betrifft ein Verfahren zum Entfernen einer Abschirmung eines Kabels, wonach ein Schneidwerkzeug an eine Außenfläche der Abschirmung in eine Schnittposition zugestellt wird, nach dem Oberbegriff von Anspruch 1.

Die Erfindung betrifft auch eine Vorrichtung zum Entfernen einer freiliegenden Abschirmung nach dem Oberbegriff von Anspruch 14.

Kabel finden in der Elektrotechnik und der Informationstechnik vielfältige Anwendungen zur Übertragung von elektrischer Energie oder zur Übermittlung von Informationen bzw. Signalen.

Die aus dem Stand der Technik bekannten Kabel weisen üblicherweise einen oder mehrere Leiter auf, die von einer Isolierung umschlossen sind. Ein von einer Isolierung umschlossener Leiter wird dabei auch als Ader bezeichnet. Die zu einem Kabel zusammengefügten Adern werden in der Regel von einer Abschirmung umgeben, bei der es sich zumeist um eine metallische Abschirmung, insbesondere eine Metallfolie bzw. eine metallisierte Folie handelt. Ferner ist in der Regel vorgesehen, dass die metallisierte Folie von einer metallischen Außenleiterschirmung, im Regelfall einem Schirmgeflecht, umgeben ist. An der Außenseite weist das Kabel einen Kabelmantel bzw. eine Kabelhülle auf, welche das Schirmgeflecht umschließt.

Insofern das Kabel zwei oder mehr Adern aufweist, ist zumeist vorgesehen, dass die Adern miteinander verseilt sind. Die Verseilung erfolgt dadurch, dass die Adern miteinander verdrillt werden. Aus dem Stand der Technik sind verschiedene Arten von Verseilungen bekannt. Es ist aus dem Stand der Technik insbesondere bekannt, zwei Adern miteinander zu verseilen, um ein geseiltes Signalleitungspaar herzustellen. Aus dem Stand der Technik ist es auch geläufig, vier Adern miteinander zu verseilen. Ein derartiges Kabel wird auch als "Stern-Vierer" bezeichnet.

Die Verseilung dient unter anderem dazu, die Adern robust und flexibel miteinander zu verbinden.

Besondere Bedeutung haben im Stand der Technik differentielle Signalleitungspaare, die zur differentiellen Signalübertragung, die auch als symmetrische Signalübertragung bezeichnet wird, eingesetzt werden. Ein derartiges Verfahren hat sich insbesondere bewährt um Signale auch bei längeren Übertragungswegen möglichst tolerant gegenüber Störeinstrahlungen übermitteln zu können. Die Übertragung erfolgt dabei statt mit nur einem einzigen Signalleiter mit einem Paar gleichartiger Signalleiter. Dabei wird auf der einen Leitung das Signal und auf der anderen Leitung ein Referenzsignal übertragen. Ein entsprechendes Kabel weist in der Regel zwei Signalleiter auf, die jeweils von einer Isolierung ummantelt sind. Ferner ist, wie vorstehend beschrieben, zumeist eine Abschirmung, ein Schirmgeflecht und ein Kabelmantel vorgesehen.

Zur Kabelkonfektion ist, unabhängig davon, wie viele Adern das Kabel aufweist, im Allgemeinen vorgesehen, dass an einem freien Ende des Kabels der Kabelmantel an einer vorgesehen Position (Schnittposition) eingeschnitten und das eingeschnittene Kabelmantelstück vollständig oder teilweise von dem Kabel abgezogen wird (Vollabzug oder Teilabzug). Anschließend wird mit einem Werkzeug eine Stützhülse auf das Schirmgeflecht gecrimpt. Im nächsten Schritt kann vorgesehen sein, dass das freiliegende, von dem Kabelmantel befreite Ende des Kabels auf die vorgesehene Länge abgelängt wird. In einem weiteren Schritt wird das Schirmgeflecht über die Stützhülse umgelegt.

Gegebenenfalls kann das Schirmgeflecht auch umgelegt werden, ohne dass vorher eine Stützhülse aufgecrimpt wird. Um den Crimpprozess mechanisch zu stabilisieren, hat sich jedoch das Aufcrimpen der Stützhülse bewährt.

Nach dem Umlegen des Schirmgeflechts wird dann durch ein Schneidwerkzeug die sich unter dem Schirmgeflecht befindliche Abschirmung, zumeist eine Metallfolie bzw. eine metallisierte Folie, eingeschnitten bzw. abgetrennt. Dadurch soll der sich unter der Abschirmung befindliche isolierte Leiter bzw. sollen die isolierten Leiter, d. h. die Adern, freigelegt werden.

Das Schneidwerkzeug um die Abschirmung einzuschneiden, weist zumeist zwei Schneiden bzw. Klingen bzw. Messer auf, die die Abschirmung von beiden Seiten einschneiden. Bekannt ist es auch, dass das Schneidwerkzeug derart gestaltet ist, dass dieses eine Schneide aufweist, die zum Abschneiden um die Abschirmung herum rotiert wird. Alternativ ist es auch möglich, das Kabel zu rotieren.

Anschließend können dann die Adern bearbeitet werden, im Regelfall derart, dass ein Stück der Isolierung am Ende der Adern entfernt wird, so dass die Leiter freiliegen.

Der vorgenannte Prozess ist insbesondere bei Kabeln, die nur einen Leiter aufweisen, gut beherrschbar. Bei Kabeln, die zwei oder mehr als zwei Leiter aufweisen, besteht das Problem, dass das Querschnittprofil der Abschirmung, die die Leiter umgibt, nicht rund ist. Das Querschnittprofil ist zumeist oval.

Das Schneidwerkzeug kann die Abschirmung mit dem ovalen Querschnittsprofil nicht zuverlässig einschneiden, ohne dass die Gefahr besteht, dass die darunterliegende Isolation eines der Leiters ebenfalls eingeschnitten und damit beschädigt wird.

Das Problem besteht im besonderen Maße bei geseilten Leitungen.

Aus dem Stand der Technik ist kein Verfahren bekannt, mit dem zuverlässig automatisiert die Abschirmung bei Kabeln mit zwei oder mehr als zwei Leitern entfernt werden kann. Daher wird die Abschirmung bislang manuell bzw. von Hand entfernt.

Insbesondere aufgrund der hohen Bedeutung von differentiellen Signalleitungspaaren, insbesondere geseilten, differentiellen Signalleitungspaaren, ist es um eine zuverlässige und kostengünstige Bearbeitung der Kabel zu ermöglichen, von besonderer Bedeutung, dass die Abschirmung automatisiert zuverlässig entfernt werden kann und eine Beschädigung der darunter liegenden Isolierung der Leiter ausgeschlossen bzw. weitgehend ausgeschlossen ist, da ansonsten das entsprechend bearbeitete Kabel aussortiert werden muss.

Der vorliegenden Erfindung liegt daher die Aufgabe zugrunde, ein Verfahren zum Entfernen einer Abschirmung eines Kabels zu schaffen, das es ermöglicht, die Abschirmung zuverlässig zu entfernen.

Der vorliegenden Erfindung liegt auch die Aufgabe zugrunde, eine Vorrichtung zum Entfernen einer Abschirmung eines Kabels zu schaffen, die es ermöglicht, die Abschirmung zuverlässig zu entfernen.

Diese Aufgabe wird hinsichtlich des Verfahrens durch die Merkmale des Anspruchs 1 gelöst.

Diese Aufgabe wird hinsichtlich der Vorrichtung durch die Merkmale des Anspruchs 14 gelöst.

Das erfindungsgemäße Verfahren zum Entfernen einer Abschirmung eines Kabels sieht vor, dass ein Schneidwerkzeug an eine Außenfläche der Abschirmung in eine Schnittposition zugestellt wird. Erfindungsgemäß ist vorgesehen, dass ein gasförmiges Medium in das Kabel eingeblasen wird, um die Abschirmung mit einer radial nach außen wirkenden Kraft zu beaufschlagen, derart, dass die Abschirmung von einer Schneide des Schneidwerkzeugs eingeschnitten wird.

Der Schnittprozess erfolgt somit erfindungsgemäß dadurch, dass die Abschirmung durch das eingeblasene gasförmige Medium an die Schneide gedrückt und dadurch eingeschnitten wird. Eine Beschädigung der Isolierung der sich unter der Abschirmung befindlichen Leiter ist somit durch den Schnittprozess nicht zu befürchten.

Abweichend von dem aus dem Stand der Technik bekannten Schnittprozess, bei dem die Schneiden bzw. die Klingen des Schneidwerkzeugs derart an die Abschirmung zugestellt werden, dass die Schneiden die Abschirmung durch die Zustellbewegung einschneiden, bewegt sich die Abschirmung auf die Schneiden des Schneidwerkzeugs zu und wird dadurch eingeschnitten bzw. abgetrennt.

Das Schneidwerkzeug kann über eine oder auch mehrere Schneiden verfügen, die derart positioniert sind, dass diese die Außenfläche der Abschirmung radial außenliegend umgeben.

Insofern im Rahmen der Erfindung hinsichtlich des Schneidwerkzeugs Bezug genommen wird auf eine Schneide, ist dies derart zu verstehen, dass auch mehr als eine Schneide, vorzugsweise zwei Schneiden oder mehr als zwei Schneiden vorgesehen sein können.

Die erfindungsgemäße Lösung ermöglicht es, die Schneide des Schneidwerkzeugs in einem geeigneten stationären Abstand zu der Abschirmung zu positionieren, derart, dass die Abschirmung durch das eingeblasene gasförmige Medium derart an die Schneide gedrückt wird, dass die Abschirmung durch die Schneide eingeschnitten wird. Gegebenenfalls kann vorgesehen sein, dass die Schneide des Schneidwerkzeugs zusätzlich auch noch ein definiertes Wegstück in Richtung auf die Abschirmung zugestellt wird, es ist jedoch zu bevorzugen, dass die Schneide des Schneidwerkzeugs während des Prozesses des Abschneidens der Abschirmung stationär, d. h. unbeweglich verbleibt.

In einer bevorzugten Ausführungsform, bei der das Schneidwerkzeug zwei Schneiden aufweist, sind diese in der Schnittposition vorzugsweise in einem geeigneten festen Abstand zueinander positioniert bzw. fixiert, derart, dass die Schneiden das Kabel bzw. die Abschirmung des Kabels zwischen sich aufnehmen.

Die Schneide des Schneidwerkzeugs wird vorzugsweise vor dem durch das Einblasen des gasförmigen Mediums initiierten Schnittprozess derart zugestellt, dass die Abschirmung durch das eingeblasene Medium derart gegen die Schneide gedrückt wird, dass die Abschirmung in der gewünschten Weise eingeschnitten wird.

Vorzugsweise ist vorgesehen, dass die Abschirmung durch den Schnittvorgang vollständig abgetrennt wird. Es ist jedoch im Rahmen der Erfindung auch möglich, dass die Abschirmung nicht vollständig in der Tiefe durchgeschnitten wird und/oder ringförmig umlaufend einer oder mehrere Stege verbleiben. Es hat sich gezeigt, dass es zum Abtrennen der Abschirmung bereits ausreichend sein kann, wenn die Abschirmung über einen Teil ihrer Tiefe eingeschnitten wird und/oder einer oder mehrere Stege verbleiben. Der nicht vollständig durchgeschnittene Bereich der Abschirmung kann leicht manuell abgetrennt werden bzw. es hat sich gezeigt, dass beim Wegfahren des Schneidwerkzeugs, wobei das Schneidwerkzeug nach dem Einschneiden vorzugsweise radial nach außen von dem Kabel wegbewegt wird, die Abschirmung an dem Schneidwerkzeug anhaftet und dadurch etwaige nicht vollständig abgeschnittene Bereiche der Abschirmung abreißen.

Von Vorteil ist es, wenn das gasförmige Medium in einen Zwischenraum radial innerhalb bzw. unterhalb der Abschirmung eingeblasen wird derart, dass das gasförmige Medium unmittelbar auf eine Innenfläche der Abschirmung einwirkt.

Dadurch, dass das gasförmige Medium in einen Zwischenraum radial innerhalb bzw. unterhalb der Abschirmung eingeblasen wird, wirkt die von dem gasförmigen Medium erzeugte Druckkraft auf die radial innenliegende Innenfläche der Abschirmung ein, bläst diese auf und drückt die Abschirmung somit gegen die Schneide des Schneidwerkzeugs.

Von Vorteil ist es, wenn das Schneidwerkzeug bzw. die wenigstens eine Schneide des Schneidwerkzeugs derart an die Abschirmung zugestellt wird, dass ein Weiterströmen des gasförmigen Mediums unterhalb der Abschirmung in einer axialen Richtung durch das Schneidwerkzeug reduziert bzw. vorzugsweise verhindert wird. Dies ist insbesondere bei kurzen Kabeln von Vorteil, da es bei diesen ansonsten vorkommen kann, dass das gasförmige Medium durch das Kabel durchgeblasen wird. Durch das Zustellen des Schneidwerkzeugs an die Abschirmung, vorzugsweise dass das Schneidwerkzeug die Abschirmung kontaktiert, staut sich das gasförmige Medium in dem Zwischenraum vor dem Schneidwerkzeug an bzw. der Druck im Zwischenraum erhöht sich entsprechend, sodass die Abschirmung aufgeblasen und entsprechend stark gegen die Schneide des Schneidwerkzeugs gedrückt und somit eingeschnitten wird. Durch das Einschneiden platzt die Abschirmung dann im Bereich der Schneide auf und das dort ausströmende gasförmige Medium unterstützt, ringförmig umlaufend, ein weiteres Abreißen der Abschirmung im Bereich der Schneide.

Das erfindungsgemäße Verfahren führt dazu, dass die Abschirmung aufgeblasen wird und dadurch eingeschnitten bzw. abgetrennt werden kann, ohne dass die darunter liegende Isolation der Leiter des Kabels beschädigt wird.

Von Vorteil ist es, wenn das Kabel wenigstens einen Leiter oder wenigstens zwei Leiter aufweist, und die Abschirmung den oder die Leiter umgibt.

Das erfindungsgemäße Verfahren eignet sich zum Entfernen einer Abschirmung eines Kabels, welches nur einen Leiter, insbesondere einen Signalleiter aufweist. Das erfindungsgemäße Verfahren eignet sich jedoch insbesondere wenn das Kabel wenigstens einen Leiter oder wenigstens zwei Leiter, insbesondere Signalleiter, aufweist. Besonders vorteilhaft lässt sich das erfindungsgemäße Verfahren einsetzen, wenn das Kabel zwei Leiter, insbesondere zwei Signalleiter, aufweist, die von der Abschirmung umgeben sind. Ganz besonders eignet sich das Verfahren, wenn es sich bei den Leitern, insbesondere bei den zwei Leitern, um geseilte Leiter handelt.

Besonders vorteilhaft lässt sich das erfindungsgemäße Verfahren einsetzen, wenn es sich bei den zwei Leitern um ein Signalleitungspaar, insbesondere um ein differentielles Signalleitungspaar, insbesondere ein geseiltes differentielles Signalleitungspaar, handelt. Bei derartigen Kabeln lässt sich mit den bisher aus dem Stand der Technik bekannten Maßnahmen die Folie zuverlässig nur von Hand entfernen.

Insofern nachfolgend im Rahmen der Erfindung auf ein Kabel mit einem Leiter bzw. einer Ader verwiesen wird, ist dies derart zu verstehen, dass das Kabel auch insbesondere zwei oder mehr als einen bzw. mehr als zwei Leiter aufweisen kann. Die Leiter sind dabei vorzugsweise als Signalleiter ausgebildet bzw. werden entsprechend verwendet, insbesondere wie vorstehend beschrieben. Umgekehrt ist die Verwendung des Plurals bezüglich der Leiter bzw. der Adern auch derart zu verstehen, dass nur ein Leiter bzw. eine Ader bei dem Kabel vorgesehen sein kann.

Das erfindungsgemäße Verfahren eignet sich insbesondere für die automatisierte Kabelkonfektion.

Vorzugsweise kann das erfindungsgemäße Verfahren derart in ein bestehendes Verfahren zur Kabelkonfektion integriert werden, wie dies bezüglich des Standes der Technik vorstehend beschrieben wurde.

Erfindungsgemäß kann vorgesehen sein, dass auf ein freies Ende des Kabels, an dem die Abschirmung freigelegt ist, eine Gasführung aufgebracht wird derart, dass die Gasführung einen sich in axialer Richtung erstreckenden Abschnitt der freiliegenden Abschirmung des Kabels radial umgibt, wobei zwischen einer Innenfläche der Gasführung und der Außenfläche der Abschirmung ein vorzugsweise ringförmiger Spalt verbleibt.

Vorzugsweise wird die Gasführung derart auf das freie Ende des Kabels aufgebracht, dass ein ringförmiger Spalt zwischen einer Innenfläche der Gasführung und der Außenfläche der Abschirmung verbleibt.

Vorzugsweise wird die Gasführung derart positioniert, dass die Gasführung das freie Ende des Kabels und einen sich in axialer Richtung erstreckenden Abschnitt der freiliegenden Abschirmung des Kabels radial umgibt.

Von Vorteil ist es, wenn die Gasführung derart positioniert wird, dass ein vorderes auf das Kabel aufgeschobenes Ende der Gasführung benachbart zu dem Schneidwerkzeug endet.

Von Vorteil ist es, wenn die Gasführung benachbart zu dem Schneidwerkzeug derart endet, dass zwischen der Gasführung und dem Schneidwerkzeug ein Abstand verbleibt, so dass sich die Abschirmung vor dem Schneidwerkzeug bzw. der Schneide des Schneidwerkzeugs aufblasen kann, vorzugsweise derart, dass sich die Abschirmung zumindest teilweise radial weiter nach außen erstreckt als die Innenfläche der Gasführung.

Die Gasführung ist vorzugsweise als Rohr oder Schlauch ausgebildet. Es kann sich insbesondere um ein starres Rohr bzw. einen starren Schlauch handeln. Insofern der allgemeine Begriff Gasführung verwendet wird, kann es sich insbesondere um ein Rohr oder einen Schlauch handeln.

Es hat sich gezeigt, dass sich ein Einschneiden bzw. Abtrennen der Abschirmung bereits dadurch erreichen lässt, dass unterhalb der Abschirmung durch das eingeblasene gasförmige Medium ein Überdruck erzeugt wird, der vorzugsweise im Zwischenraum zwischen der Abschirmung und den isolierten Leitern, insbesondere einem isolierten Signalleitungspaar wirkt. Der Überdruck kann dabei durch einen Gasstrom erzeugt werden, der von einem Gebläse erzeugt und über die Gasführung vom Gebläse zu dem freien Ende des Kabels bzw. zum Ende des Kabels in den Zwischenraum zwischen der Abschirmung und dem isolierten Signalleiter geleitet wird.

Besonders vorteilhaft lässt sich ein Einschneiden bzw. Abtrennen der Abschirmung dadurch erreichen, dass innerhalb einer kurzen Zeitdauer bzw. explosionsartig ein Überdruck bzw. ein hoher Druck bzw. ein Druckimpuls erzeugt wird.

Ein besonders vorteilhaftes Verfahren zum Entfernen einer Abschirmung wird nachfolgend dargestellt.

Von Vorteil ist es, wenn die Abschirmung in einer Öffnungsphase innerhalb der Gasführung derart radial nach außen bewegt wird, dass wenigstens ein ringförmiger Abschnitt der Abschirmung an einer Innenfläche der Gasführung anliegt.

Dadurch, dass in der Öffnungsphase die Abschirmung innerhalb der Gasführung derart radial nach außen bewegt wird, dass diese zumindest in einem ringförmigen Abschnitt an der Innenfläche der Gasführung anliegt, wird der Strom des gasförmigen Mediums in den Zwischenraum unterhalb der Abschirmung eingeleitet, sodass die Abschirmung besonders wirkungsvoll aufgeblasen bzw. unterhalb der Abschirmung ein Überdruck erzeugt wird.

Dass die Abschirmung in der Öffnungsphase an der Innenfläche der Gasführung anliegt, lässt sich auf verschiedene Weisen erreichen. Zwei besonders vorteilhafte Lösungen sind nachfolgend dargestellt.

Von Vorteil ist es, wenn in der Öffnungsphase Gas derart in die Gasführung eingeblasen wird, dass das Gas an dem freien Ende des Kabels vorbei durch den ringförmigen Spalt zwischen der Innenfläche der Gasführung und der Außenfläche der Abschirmung in Richtung auf das Schneidwerkzeug strömt und/oder dass in der Gasführung Öffnungen vorhanden sind, durch die Gas nach außen gesaugt wird, um die Abschirmung an die Innenfläche der Gasführung anzusaugen.

Dadurch, dass in der Öffnungsphase Gas derart in die Gasführung eingeblasen wird, dass das Gas durch den ringförmigen Spalt zwischen der Innenfläche der Gasführung und der Außenfläche der Abschirmung in Richtung auf das Schneidwerkzeug strömt, wird erreicht, dass sich die Abschirmung öffnet und sich die Abschirmung an die Innenfläche der Gasführung anlegt. Somit wird der ringförmige Spalt zwischen der Innenfläche der Gasführung und der Außenfläche der Abschirmung weitgehend vorzugsweise vollständig verschlossen, solange der Druck aufrechterhalten wird.

Das Öffnen der Abschirmung ergibt sich dadurch, dass sich die Strömungsgeschwindigkeit des gasförmigen Mediums im Bereich des ringförmigen Spalts, der eine Engstelle darstellt, erhöht.

Die Erfinder haben zum Öffnen der Abschirmung den sogenannten Bernoulli-Effekt ausgenutzt, wonach es bei der Erhöhung der Strömungsgeschwindigkeit eines Gases zu einem Absinken des Drucks (Druckabfall) kommt. Der Druck in der Engstelle ist somit geringer als der Druck in Strömungsrichtung vor der Engstelle. Dies führt dazu, dass die Abschirmung radial nach außen bewegt wird und sich somit der ringförmige Spalt schließt.

Alternativ oder ergänzend kann das Öffnen der Abschirmung, derart, dass die Abschirmung an der Innenfläche der Gasführung anliegt, auch dadurch erreicht werden, dass in der Gasführung Öffnungen vorhanden sind, durch die Gas nach außen gesaugt wird, wodurch auch die Abschirmung nach außen gesaugt wird und diese somit an der Innenfläche der Gasführung anliegt.

Im Hinblick auf das erfindungsgemäße Verfahren hat es sich als vorteilhaft herausgestellt, das Öffnen der Abschirmung durch das Einblasen des gasförmigen Mediums zu erreichen.

Von Vorteil ist es, wenn nach der Öffnungsphase in einer Schnittphase, um die Abschirmung durch die Schneide des Schneidwerkzeugs einzuschneiden, ein in Richtung auf das Schneidwerkzeug strömendes Gas mit Überdruck in die Gasführung eingeblasen wird.

Es hat sich gezeigt, dass es von Vorteil ist, wenn in einer Schnittphase, d. h. in der Phase, in der die Abschirmung durch die Schneide eingeschnitten werden soll, das eingeblasene bzw. einströmende Gas mit Überdruck in die Gasführung eingeblasen wird. Vorzugsweise wird dabei der Druck gegenüber dem Druck des Gases in der Öffnungsphase, d. h. wenn zunächst erreicht werden soll, dass die Abschirmung an der Innenfläche der Gasführung anliegt, erhöht.

Von Vorteil ist es, wenn in der Schnittphase zur Erzeugung des Überdrucks ein Druckstoß in die Gasführung eingeleitet wird.

Besonders vorteilhaft ist es, wenn das Gas derart eingeleitet wird, dass ein Explosionseffekt entsteht, d. h. ein explosionsartiger Druckstoß in die Gasführung eingeleitet wird.

Wie vorstehend bereits erwähnt, eignet es sich in besonderer Weise, wenn in einem ersten Schritt (Öffnungsphase) die Abschirmung an die Innenfläche der Gasführung angelegt wird (durch Einblasen eines Gases und/oder Ansaugen) und in einem zweiten Schritt (Schnittphase) dann ein Überdruck erzeugt wird.

Die Erfindung ist derart zu verstehen, dass die beiden Schritte auch ineinander übergehen können oder das auf die Öffnungsphase verzichtet wird und das Gas direkt mit einem geeigneten Überdruck in die Gasführung eingeblasen wird.

Besonders vorteilhaft ist es jedoch, wenn in der Öffnungsphase das Gas zunächst mit einem ersten Druck eingeblasen wird, der geringer ist als der zweite Druck mit dem das Gas in der Schnittphase eingeblasen wird. Vorzugsweise ist der zweite Druck wenigstens 1 bar, vorzugsweise wenigstens 2 bar, höher als der erste Druck.

Von Vorteil ist es ferner, wenn im Rahmen des erfindungsgemäßen Verfahrens zunächst die Gasführung über das freie Ende des Kabels, an dem die Abschirmung freigelegt ist, aufgeschoben bzw. übergestülpt wird. In der anschließenden Öffnungsphase kann dann die Abschirmung entsprechend geweitet bzw. aufgeblasen werden, ohne die darunter liegenden Leiter bzw. deren Isolierung zu beschädigen. Anschließend wird dann das Schneidwerkzeug an eine Außenfläche der Abschirmung zugestellt, vorzugsweise aufgedrückt, vorzugsweise jedoch ohne die Abschirmung bereits einzuschneiden. Anschließend wird dann in der Schnittphase in der bereits beschriebenen Art und Weise die Abschirmung gegen die Schneide gedrückt, vorzugsweise dadurch, dass ein Überdruck erzeugt wird, der höher ist als der Druck in der Öffnungsphase.

Das Schneidwerkzeug kann bereits während der Öffnungsphase oder vorzugsweise vor der Öffnungsphase, gegebenenfalls auch vor dem Aufbringen der Gasführung in der Schnittposition positioniert werden.

Von Vorteil ist es, wenn die Gasführung in der Schnittphase, während das Gas mit Überdruck in die Gasführung eingeblasen wird, von dem Schneidwerkzeug wegbewegt wird.

Durch das Wegbewegen der Gasführung von dem Schneidwerkzeug wird ein Aufblasen der Abschirmung erleichtert bzw. nicht durch die Gasführung behindert. Die Erfinder haben festgestellt, dass sich dadurch ein Abtrennen der Abschirmung weiter verbessern lässt. Vorzugsweise wird die Gasführung so weit von dem Schneidwerkzeug wegbewegt, dass die Gasführung die Abschirmung nicht mehr radial umgibt bzw. die Abschirmung freiliegt. Vorzugsweise wird die Gasführung entgegen der Aufbringbewegung der Gasführung von dem Schneidwerkzeug wegbewegt.

Bei dem Schneidwerkzeug kann es sich im Rahmen der Erfindung um ein bekanntes Schneidwerkzeug, beispielsweise mit einer oder zwei Klingen bzw. Schneiden handeln. Gegebenenfalls kann auch vorgesehen sein, dass das Schneidwerkzeug während des Einschneidens rotiert.

Vorzugsweise ist das Schneidwerkzeug, insbesondere die Schneiden des Schneidwerkzeugs, während des Einschneidens jedoch stationär und unbeweglich.

Das Schneidwerkzeug kann insbesondere über bekannte Formwerkzeuge, z. B. Formmesser, verfügen.

Das Schneidwerkzeug kann alternativ oder ergänzend zu den Klingen oder Schneiden auch über einen Heizdraht, einen Laser oder ein anderes Mittel verfügen, um die Abschirmung einzuschneiden, wenn die Abschirmung gegen das Schneidwerkzeug gedrückt wird. Die Offenbarung der Erfindung bezüglich des Schneidwerkzeugs ist hinsichtlich der Klingen bzw. Schneiden derart zu verstehen, dass das Schneidwerkzeug alternativ oder ergänzend auch andere Mittel zum Einschneiden bzw. Abtrennen, insbesondere die vorgenannten anderen Mittel, aufweisen kann.

Das Schneidwerkzeug ist vorzugsweise zwischen dem axialen Ende des Außenleiterschirms des Kabels und dem vorderen Ende der Gasführung positioniert. Vorzugsweise sind dabei das Schneidwerkzeug und das Kabel derart axial zueinander positioniert, dass die Leiter in der Schnittebene des Schneidwerkzeugs in einer horizontalen Ebene liegen. Dies ist besonders vorteilhaft, wenn das Kabel zwei Leiter, insbesondere zwei Signalleiter aufweist, die als differentielles Signalleitungspaar ausgebildet sind.

Von Vorteil ist es, wenn das Schneidwerkzeug Ausformungen aufweist, um die Leiter in der Schnittposition aufzunehmen, wonach um die Leiter in die Ausformungen des Schneidwerkzeugs in der Schnittposition einzulegen, die axiale Position des Schneidwerkzeugs und/oder die axiale Position des Kabels angepasst wird und/oder das Schneidwerkzeug und/oder das Kabel rotiert wird.

Grundsätzlich kann es sich bei dem Schneidwerkzeug um ein bekanntes Schneidwerkzeug handeln. Es hat sich jedoch gezeigt, dass es sich in besonderer Weise eignet, wenn das Schneidwerkzeug Ausformungen aufweist, um die Leiter in der Schnittposition aufzunehmen. Dabei kann vorgesehen sein, dass das Schneidwerkzeug derart gestaltet ist, dass dieses an die Anzahl der Leiter angepasst ist. Das heißt, dass das Schneidwerkzeug Ausformungen aufweist, um zwei Leiter aufzunehmen, wenn das zu bearbeitende Kabel zwei Leiter aufweist.

Vorzugsweise ist das Schneidwerkzeug derart gestaltet, dass dieses zwei Schneiden aufweist, die jeweils eine Teilausformung aufweisen, derart, dass eine Ausformung für einen Leiter durch jeweils eine Teilausformung in einer der Schneiden gebildet wird.

Die Querschnittsgeometrie der Schneiden des Schneidwerkzeugs ist vorzugsweise derart ausgebildet, dass die Schneiden des Schneidwerkzeugs in der vorgesehenen stationären Schnittposition gemeinsam eine "brillenförmige" Ausnehmung ausbilden. Alternativ ist selbstverständlich auch eine andere Querschnittsgeometrie der Schneiden bzw. der Klingen möglich, zum Beispiel eine tropfenförmige oder ellipsenförmige Ausnehmung.

Von Vorteil ist es, wenn das Schneidwerkzeug und das Kabel derart zueinander positioniert werden, dass sich eine orthogonal durch die Mittelachsen der beiden Leiter verlaufende Gerade orthogonal zu der Zustellbewegung des Schneidwerkzeugs erstreckt.

Die vorstehend beschriebene Positionierung des Schneidwerkzeugs und des Kabels zueinander hat sich als besonders geeignet herausgestellt, um die Abschirmung einzuschneiden und zu entfernen.

Von Vorteil ist es, wenn die Gasführung derart gestaltet ist, dass diese einen runden Querschnitt aufweist. Alternativ kann auch vorgesehen sein, dass die Gasführung ein Querschnittsprofil aufweist, das an das Querschnittsprofil der Metallfolie angepasst ist, d. h. die Gasführung kann zum Beispiel auch ein ovales Querschnittsprofil aufweisen.

Von Vorteil ist es, wenn zum Einblasen des Gases ein Gebläse verwendet wird.

Ferner ist es von Vorteil, wenn als Gas Luft verwendet wird.

Das erfindungsgemäße Verfahren eignet sich insbesondere wenn die Abschirmung des Kabels als metallische Abschirmung, insbesondere als Metallfolie, insbesondere als metallisierte Folie, ausgebildet ist.

Grundsätzlich ist es mit dem erfindungsgemäßen Verfahren auch möglich einen Außenleiterschirm, insbesondere in Ausbildung als Schirmgeflecht, abzutrennen. In besonderer Weise eignet es sich jedoch mit dem erfindungsgemäßen Verfahren eine metallische Abschirmung, insbesondere eine Metallfolie bzw. eine metallisierte Folie zu entfernen, die vorzugsweise als endloses Band ausgebildet ist, welches um die innenliegenden Adern bzw. die isolierten Leiter gewickelt ist, vorzugsweise derart, dass sich die Wicklungen der Metallfolie über ein bestimmtes Umfangssegment überlappen.

Das erfindungsgemäße Verfahren wird vorzugsweise derart ausgeführt, dass sich die Abschirmung in der Öffnungsphase zunächst an die Innenfläche der Gasführung anlegt und dadurch der Gasstrom in den Zwischenraum zwischen der Innenfläche der Abschirmung und den isolierten Leitern eingeleitet wird bzw. sich eine "gasdichte Verbindung" zwischen der Innenfläche der Gasführung und der Abschirmung ergibt

Von Vorteil ist es, wenn die Innenfläche der Gasführung eine Ausnehmung aufweist, an die sich die Abschirmung in der Öffnungsphase anlegen kann. Durch die Ausnehmung in der Innenfläche der Gasführung wird das Einleiten des Gasstroms in den Zwischenraum bzw. die "gasdichte Verbindung" zwischen der Innenfläche der Gasführung und der Abschirmung unterstützt. Die Ausnehmung ist vorzugsweise derart ausgebildet bzw. die Gasführung ist derart bezüglich des Kabels positioniert, dass sich ein dem Schneidwerkzeug abgewandtes vorderes Ende der Abschirmung in der Ausnehmung anliegt, wenn das Gebläse in einer Öffnungsphase das gasförmige Medium einbläst. Dadurch, dass das vordere Ende der Abschirmung innerhalb der Ausnehmung positioniert wird, ragt dieses nicht in den Gaskanal der Gasführung bzw. in das Rohrinnere hinein.

Es hat sich gezeigt, dass sich ein besonders gutes Einschneiden bzw. Abtrennen der Abschirmung erreichen lässt, wenn das Gas, vorzugsweise die Luft, stoßförmig eingeleitet wird, d. h. viel Luftvolumen in einem sehr kurzen Zeitintervall (Explosionseffekt).

Das erfindungsgemäße Verfahren eignet sich für eine Vielzahl von Kabeln, zum Beispiel für "twisted-pair" und "parallel-pair" Signalleitungen sowie für mehradrige Kabel, zum Beispiel HSD (Stern-Vierer); USB (vier parallele Signalleitungen) und dergleichen.

Eine vorteilhafte erfindungsgemäße Vorrichtung zum Entfernen einer freiliegenden Abschirmung an einem Ende eines Kabels ergibt sich aus Anspruch 14.

Vorgesehen ist bei der erfindungsgemäßen Vorrichtung ein Schneidwerkzeug, welches zum Abschneiden der Abschirmung an eine Außenfläche der Abschirmung zustellbar ist. Erfindungsgemäß ist dabei eine Gasführung vorgesehen ist, welche auf das Ende des Kabels, an dem die Abschirmung freigelegt ist, aufbringbar ist, derart, dass die Gasführung einen sich in axialer Richtung des Kabels erstreckenden Abschnitt der freiliegenden Abschirmung radial umgibt, wobei die Gasführung derart gestaltet ist, dass zwischen der Innenfläche der Gasführung und der Außenfläche der Abschirmung ein ringförmiger Spalt verbleibt, und wobei ein Gebläse vorgesehen ist, um ein gasförmiges Medium innerhalb bzw. unterhalb der Abschirmung einzublasen derart, dass die Abschirmung mit einer radial nach außen wirkenden Kraft beaufschlagt wird derart, dass eine Schneide des Schneidwerkzeugs die nach außen gedrückte Abschirmung einschneidet.

Das Gas, vorzugsweise Luft, wird vorzugsweise in einen Zwischenraum radial innerhalb bzw. unterhalb der Abschirmung eingeblasen.

Von Vorteil ist es, wenn die Vorrichtung derart gestaltet ist, dass die Innenfläche der Gasführung eine Ausnehmung aufweist und die Gasführung derart bezüglich des Kabels positioniert wird, dass ein dem Schneidwerkzeug abgewandtes vorderes Ende der Abschirmung in der Ausnehmung anliegt, wenn das Gebläse in einer Öffnungsphase das gasförmige Medium einbläst.

Die Vorteile der erfindungsgemäßen Vorrichtung ergeben sich aus den Ausführungen zu dem erfindungsgemäßen Verfahren analog.

Merkmale, die bereits im Zusammenhang mit dem erfindungsgemäßen Verfahren beschrieben wurden, sind selbstverständlich auch für die erfindungsgemäße Vorrichtung vorteilhaft umsetzbar - und umgekehrt. Ferner können Vorteile, die bereits im Zusammenhang mit dem erfindungsgemäßen Verfahren genannt wurden, auch auf die erfindungsgemäße Vorrichtung bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

Nachfolgend wird ein Ausführungsbeispiel der Erfindung anhand der Zeichnung näher beschrieben.

Die Figuren zeigen ein bevorzugtes Ausführungsbeispiel, in dem einzelne Merkmale der vorliegenden Erfindung in Kombination miteinander dargestellt sind. Die Erfindung ist jedoch nicht auf die dargestellte Kombination beschränkt.

In den Figuren sind funktionsgleiche Elemente mit denselben Bezugszeichen versehen.

Es zeigt schematisch:
- Figur 1: eine Seitenansicht auf eine prinzipmäßige Darstellung eines teilweise abisolierten Kabels;
- Figur 2: einen Schnitt durch das in Figur 1 dargestellte Kabel;
- Figur 3: eine Seitenansicht auf das in Figur 1 dargestellte Kabel, wobei ein Außenleiterschirm umgelegt ist und ein Schneidwerkzeug an eine Außenfläche einer Abschirmung des Kabels zugestellt ist;
- Figur 4: einen Schnitt durch das in Figur 3 dargestellte Kabel;
- Figur 5: eine Darstellung gemäß Figur 3, wobei auf das freie Ende des Kabels eine Gasführung aufgebracht ist;
- Figur 6: eine prinzipmäßige Darstellung einer Öffnungsphase des erfindungsgemäßen Verfahrens, in der ein gasförmiges Medium in die Gasführung eingeblasen wird;
- Figur 7: eine prinzipmäßige Darstellung des erfindungsgemäßen Verfahrens, wobei sich die Abschirmung aufgrund des einströmenden gasförmigen Mediums bereits geöffnet hat und an der Innenfläche der Gasführung anliegt;
- Figur 8: eine vergrößerte prinzipmäßige Ausschnittsdarstellung gemäß Figur 7, wobei ein vorderes Ende der Abschirmung des Kabels in einer Ausnehmung an einer Innenfläche der Gasführung anliegt;
- Figur 9: eine prinzipmäßige Darstellung einer Schnittphase des erfindungsgemäßen Verfahrens, in der durch einen Überdruck die Abschirmung soweit aufgeblasen wird, dass die Abschirmung gegen Schneiden des Schneidwerkzeugs drückt; und
- Figur 10: eine prinzipmäßige Darstellung der nach der Schnittphase abgetrennten Abschirmung.

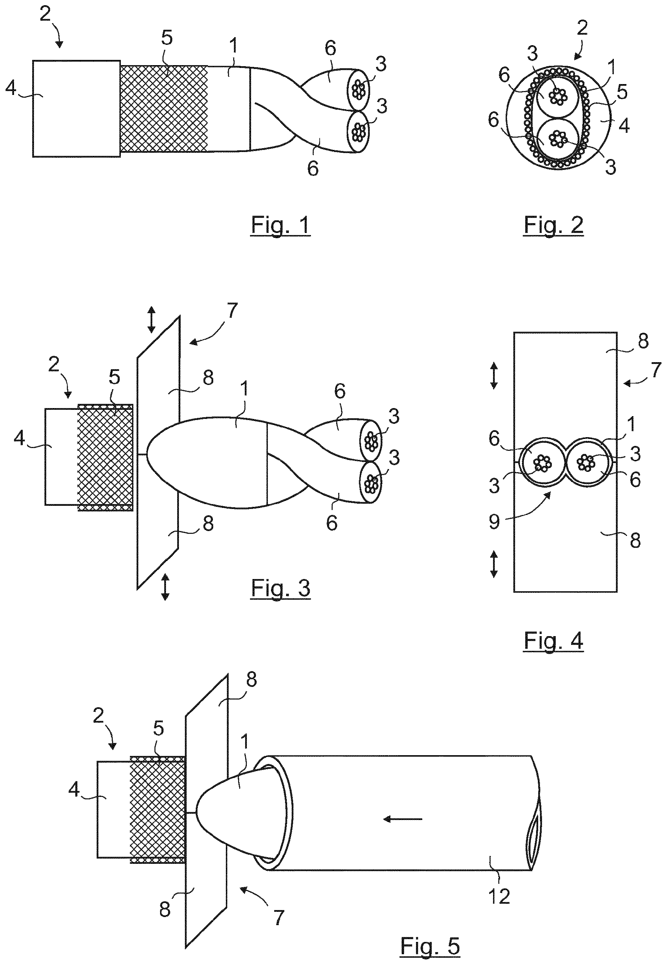

Die Figuren 1 bis 10 zeigen ein besonders bevorzugtes Ausführungsbeispiel, um das erfindungsgemäße Verfahren zum Entfernen einer Abschirmung 1 eines Kabels 2 auszuführen. Das erfindungsgemäße Verfahren ist nicht auf das im Ausführungsbeispiel dargestellte Verfahren beschränkt. Vielmehr lassen sich die einzelnen Verfahrensschritte auch mit anderen Verfahrensschritten kombinieren bzw. es können Verfahrensschritte entfallen, so wie dies in der vorstehenden Beschreibung der Erfindung dargestellt wurde.

Im Ausführungsbeispiel ist ein Kabel 2 dargestellt, welches zwei Leiter 3 aufweist.

Das Ausführungsbeispiel ist derart zu verstehen, dass das Kabel 2 auch nur einen Leiter 3, wenigstens einen Leiter 3, wenigstens zwei Leiter 3 oder eine Mehrzahl an Leitern 3 aufweisen kann. Insbesondere kann das Verfahren auch bei einem sogenannten Stern-Vierer angewendet werden.

Im Ausführungsbeispiel sind die dargestellten zwei Leiter 3 als geseilte Leiter 3 ausgebildet. Das erfindungsgemäße Verfahren eignet sich insbesondere um die Abschirmung 1 von zwei Leitern 3 zu entfernen, die als Signalleitungspaar, insbesondere als differentielles Signalleitungspaar, ausgebildet sind. In ganz besonderer Weise eignet sich das erfindungsgemäße Verfahren, wie im Ausführungsbeispiel dargestellt, zum Entfernen der Abschirmung 1 von zwei Leitern 3, die als geseiltes differentielles Signalleitungspaar ausgebildet sind.

Die Beschreibung des Ausführungsbeispiels ist sowohl als Offenbarung für das erfindungsgemäße Verfahren als auch für die erfindungsgemäße Vorrichtung zu verstehen.

Die Abschirmung 1 des Kabels 2 kann grundsätzlich einen beliebigen Aufbau aufweisen. Im Ausführungsbeispiel ist vorgesehen, dass die Abschirmung 1 als metallische Abschirmung, insbesondere als Metallfolie bzw. als metallisierte Folie ausgebildet ist. Im Ausführungsbeispiel wird nachfolgend Bezug genommen darauf, dass die Abschirmung 1 als metallisierte Folie 1 ausgebildet ist, hierauf ist das Ausführungsbeispiel jedoch nicht beschränkt.

In den Figuren 1 und 2 ist zur Erläuterung des erfindungsgemäßen Verfahrens ein Kabel 2 dargestellt, welches an einem Ende teilweise abisoliert ist.

Eine Kabelkonfektionierung durch den ein Kabel 2 in den in den Figuren 1 und 2 dargestellten Zustand gebracht werden kann, ist aus dem Stand der Technik grundsätzlich bekannt. Im Ausführungsbeispiel kann vorzugsweise zunächst vorgesehen sein, dass ein Kabelmantel 4 des Kabels 2 an einer vorgesehenen Stelle eingeschnitten und das dem Kabelende zugewandte, eingeschnittene Kabelmantelstück teilweise oder vollständig (wie im Ausführungsbeispiel dargestellt) abgezogen wird. Das von dem Kabel 2 abgezogene Kabelmantelstück 4 ist in den Figuren nicht dargestellt.

In nicht näher dargestellter Weise kann im Ausführungsbeispiel vorzugsweise vorgesehen sein, dass eine Stützhülse auf einen unter dem Kabelmantel 4 befindlichen Außenleiter 5, der im Ausführungsbeispiel als Schirmgeflecht 5 vorliegt, aufgecrimpt wird. Auf das Aufbringen einer Stützhülse kann gegebenenfalls auch verzichtet werden, dies ist für das erfindungsgemäße Verfahren vorliegend nicht relevant, weshalb hierauf auch nicht näher eingegangen wird.

Um den in den Figuren 1 und 2 dargestellten Zustand des Kabels 2 zu erreichen kann vorzugsweise ferner vorgesehen sein, dass das über den Kabelmantel 4 überstehende freie Teilstück des Kabels auf die vorgesehene Länge (Nullschnitt) abgelängt wird.

Zur weiteren Bearbeitung kann, wie in Figur 3 dargestellt, vorgesehen sein, dass das Schirmgeflecht 5 umgestülpt bzw. umgelegt wird, so dass dieses über den Kabelmantel 4 bzw. vorzugsweise eine Stützhülse (nicht dargestellt) umgelegt ist.

Das Umstülpen des Schirmgeflechtes 5 hat sich zwar als vorteilhaft herausgestellt, für die Durchführung des erfindungsgemäßen Verfahrens ist dies jedoch nicht unmittelbar relevant.

Das erfindungsgemäße Verfahren bezieht sich auf das Entfernen einer Abschirmung. Im Ausführungsbeispiel wird das Entfernen der sich unter dem Schirmgeflecht 5 befindlichen metallisierten Folie 1 beschrieben.

Im Rahmen der Kabelbearbeitung kann, nachdem die Abschirmung 1, wie nachfolgend noch näher beschrieben wird, eingeschnitten und entfernt wurde, vorgesehen sein, dass an den Enden der Leiter 3 eine dort vorhandene Isolierung 6 entfernt wird. Auch hier kann bei Bedarf ein Teil- oder ein Vollabzug vorgesehen sein. Die Leiter 3 mit der jeweiligen Isolierung 6 werden im Stand der Technik auch als Adern bezeichnet.

Nach dem Entfernen der Isolierung 6 von den Leitern 3 können in bekannter Weise Innenleiterkontaktelemente (nicht dargestellt) auf die abisolierten Leiter 3 befestigt, vorzugsweise aufgecrimpt werden.

Zur Durchführung des erfindungsgemäßen Verfahrens zum Entfernen der metallisierten Folie 1 ist vorgesehen, dass ein Schneidwerkzeug 7 in eine Schnittposition an eine Außenfläche der metallisierten Folie 1 zugestellt wird. Im Ausführungsbeispiel weist das Schneidwerkzeug 7 dabei zwei Schneiden 8 auf, die gemeinsam die metallische Folie 1 bzw. die Leiter 3 (inklusive deren Isolierung 6) umschließen.

Die Anzahl der Schneiden 8 ist für die Durchführung des erfindungsgemäßen Verfahrens nicht primär relevant. Es kann sowohl eine, als auch mehr als eine Schneide 8 vorgesehen sein. Es hat sich jedoch in besonderer Weise bewährt, wenn das Schneidwerkzeug 7 zwei gegenüberliegend angeordnete Schneiden 8 aufweist. Bei den Schneiden 8 kann es sich auch teilweise um Formwerkzeuge handeln.

Wie aus einer Zusammenschau der Figur 3 und der Figur 4 erkennbar ist, weist das Schneidwerkzeug 7 bzw. weisen die Schneiden 8 im Ausführungsbeispiel Ausformungen 9 auf, um die Leiter 3 (inklusive deren Isolierung 6) in der Schnittposition aufzunehmen. Insofern das Schneidwerkzeug 7 vorgesehen ist um die metallische Folie 1 von zwei Leitern 3 zu entfernen, sind die Ausformungen 9 in den Schneiden 8 derart gestaltet, dass die Ausformungen 9 in der Schnittposition eine insgesamt brillenförmige Ausbildung aufweisen, in die die Leiter 3 eingelegt sind.

Im Rahmen des Ausführungsbeispiels ist vorzugsweise vorgesehen, dass, um die Leiter 3 in die Ausformungen 9 des Schneidwerkzeugs 7 in der Schnittposition einzulegen, die axiale Position des Schneidwerkzeugs 7 und/oder die axiale Position des Kabels 2 angepasst wird. Dadurch kann erreicht werden, dass die Kabel 2 in der Schnittposition derart positioniert sind, dass die Ausformungen 9 und die Position der Leiter 3 zueinander passen.

Ergänzend oder alternativ dazu kann auch vorgesehen sein, dass das Schneidwerkzeug 7 und/oder das Kabel 2 derart rotiert wird, dass die Position der Leiter 3 und die Ausformungen 9 des Schneidwerkzeuges 7 zusammenpassen.

Von Vorteil ist es, wenn, wie in den Figuren 3 und 4 dargestellt, das Schneidwerkzeug 7 und das Kabel 2 derart zueinander positioniert werden, dass sich eine orthogonal durch die Mittelachse der beiden Leiter 3 verlaufende Gerade orthogonal zu der Zustellbewegung des Schneidwerkzeugs 7 erstreckt. Die Zustellbewegung des Schneidewerkzeugs 7 bzw. deren Schneiden 8 ist in den Figuren 3 und 4 durch die Doppelpfeile dargestellt.

Vorzugsweise befinden sich die beiden Leiter 3 in einer identischen horizontalen Ebene.

In den Figuren 3 und 4 ist, wie vorstehend beschrieben, die Zustellung bzw. die Positionierung des Schneidwerkzeugs 7 dargestellt.

Es sei darauf hingewiesen, dass es im Rahmen des erfindungsgemäßen Verfahrens nicht zwingend notwendig ist, dass das Schneidwerkzeug 7 an die Außenfläche der metallisierten Folie 1 zugestellt ist, bevor die nachfolgend beschriebenen Verfahrensschritte durchgeführt werden. Es hat sich jedoch als geeignet herausgestellt, das Schneidwerkzeug 7 zumindest vor der nachfolgend beschriebenen Schnittphase, vorzugsweise auch vor der nachfolgend beschriebenen Öffnungsphase des erfindungsgemäßen Verfahrens, zuzustellen.

Erfindungsgemäß ist vorgesehen, dass ein gasförmiges Medium in das Kabel 2 eingeblasen wird, um die metallisierte Folie 1 mit einer radial nach außen wirkenden Kraft zu beaufschlagen derart, dass die metallisierte Folie 1 von wenigstens einer der Schneiden 8 des Schneidwerkzeugs 7 eingeschnitten wird. Vorzugsweise wird hierzu vorher das Schneidwerkzeug 7 mit den Schneiden 8 derart zugestellt, dass die Schneiden 8 ein Weiterströmen des gasförmigen Mediums in Axialrichtung entlang des Kabels 2 verhindern oder zumindest reduzieren.

Im Ausführungsbeispiel ist vorgesehen, dass es sich bei dem gasförmigen Medium, welches in das Kabel 2 eingeblasen wird, um Luft handelt. Ferner ist im Ausführungsbeispiel (nicht dargestellt) vorgesehen, dass zum Einblasen des Gases bzw. der Luft ein Gebläse verwendet wird.

Das gasförmige Medium wird im Ausführungsbeispiel nachfolgend als Luft bezeichnet, hierauf ist das Ausführungsbeispiel jedoch nicht beschränkt.

Im Rahmen des erfindungsgemäßen Verfahrens ist vorzugsweise, wie im Ausführungsbeispiel dargestellt, vorgesehen, dass die Luft in einen Zwischenraum 10 radial innerhalb bzw. unterhalb der metallisierten Folie 1 eingeblasen wird derart, dass die Luft unmittelbar auf eine Innenfläche der metallisierten Folie einwirkt. Dadurch wird erreicht, dass sich die metallisierte Folie 1, bei der es sich vorzugsweise um ein gewickeltes metallisiertes Band handelt, geöffnet wird.

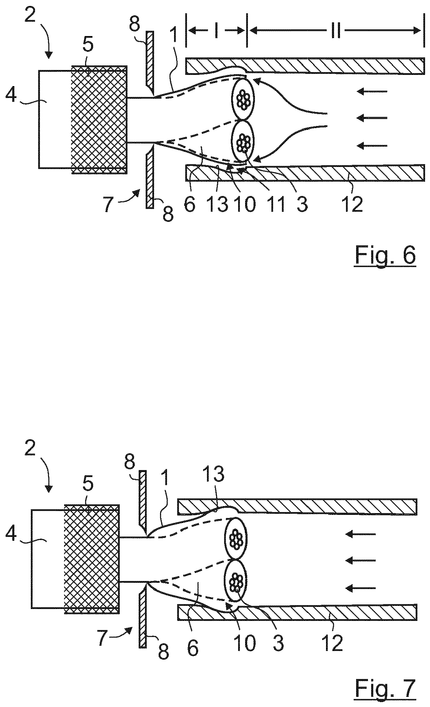

Um dies zu erreichen ist vorzugsweise vorgesehen, dass auf ein freies Ende des Kabels 2, an dem die metallisierte Folie 1 freigelegt ist, eine Gasführung 12 aufgebracht wird derart, dass die Gasführung 12 das freie Ende des Kabels 2 und einen sich in axialer Richtung erstreckenden Abschnitt der freiliegenden metallisierten Folie 1 radial umgibt, wobei zwischen einer Innenfläche der Gasführung 12 und der Außenfläche der metallisierten Folie 1 ein vorzugsweise ringförmiger Spalt 11 verbleibt. Im Ausführungsbeispiel ist vorgesehen, dass der Spalt 11 ringförmig ist. Der ringförmige Spalt 11 ist prinzipmäßig in Figur 6 dargestellt.

Im Ausführungsbeispiel ist ferner vorgesehen, dass die Gasführung 12 als Rohr oder Schlauch ausgebildet ist. Nachfolgend wird die Gasführung als Rohr 12 bezeichnet, hierauf ist das Ausführungsbeispiel jedoch nicht beschränkt zu verstehen.

Der Verfahrensschritt des Überstülpens des Rohrs 12 über die Leiter 3 und die metallisierte Folie 1 ist in den Figuren 5 und 6 prinzipmäßig dargestellt.

Wie in den Figuren 5 und 6 dargestellt ist, wird das Rohr 12 vorzugsweise derart positioniert, dass ein vorderes auf das Kabel 2 aufgeschobenes Ende des Rohrs 12 benachbart zu dem Schneidwerkzeug 7 endet. Dabei ist vorzugsweise vorgesehen, dass ein Abstand zwischen dem vorderen Ende des Rohrs 12 und dem Schneidwerkzeug 7 vorhanden ist, so dass sich die metallisierte Folie 1, wie nachfolgend noch näher dargestellt wird, entsprechend aufblasen kann.

Im Ausführungsbeispiel ist, wie in den Figuren 6 und 7 dargestellt, vorgesehen, dass die metallisierte Folie 1 in einer Öffnungsphase innerhalb des Rohrs 12 derart radial nach außen bewegt wird, dass wenigstens ein ringförmiger Abschnitt der metallisierten Folie 1 an einer Innenfläche des Rohrs 12 anliegt.

Dies wird im Ausführungsbeispiel dadurch erreicht, dass in der Öffnungsphase Luft derart in das Rohr 12 eingeblasen wird, dass die Luft an dem freien Ende des Kabels 2 vorbei durch den ringförmigen Spalt 11 (siehe Figur 6) zwischen der Innenfläche des Rohres 12 und der Außenfläche der metallisierten Folie 1 in Richtung auf das Schneidwerkzeug 8 strömt.

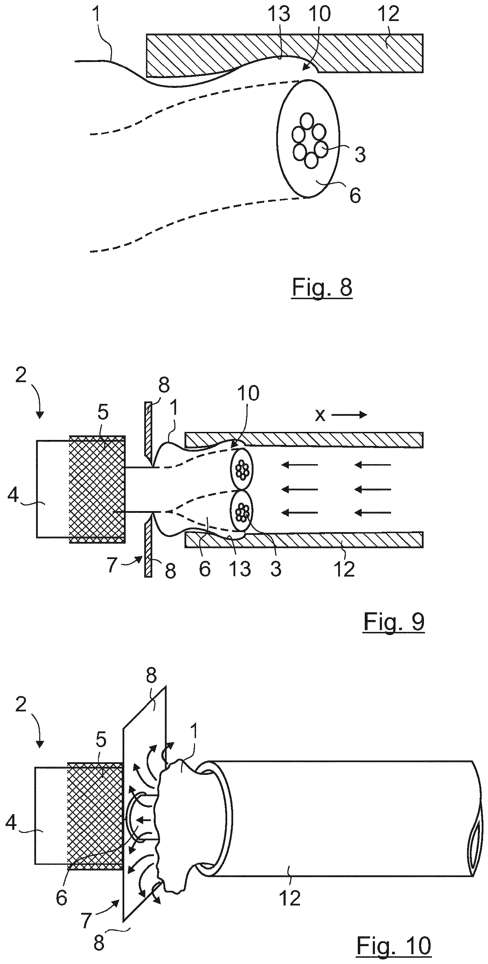

Wie sich aus der Figur 6 ergibt, strömt Luft im Bereich II im Rohr 12 auf die Leiter 3 bzw. die metallisierte Folie 1 zu. Die Engstelle im Bereich I sorgt für eine Erhöhung der Strömungsgeschwindigkeit und gemäß der Bernoulli-Regel zu einem Druckabfall. Der reduzierte Druck im Bereich I sorgt für ein Öffnen der metallisierten Folie 1. Die geöffnete metallisierte Folie 1 legt sich dabei an die Innenfläche des Rohres 12 an und verschließt den ringförmigen Spalt 11, solange der Druck aufrechterhalten wird. Es handelt sich somit um ein "selbstdichtendes" System. Dies ist in den Figuren 7 und 8 dargestellt. Wie aus den Figuren 7 und 8 ferner ersichtlich ist, nimmt der Zwischenraum 10 den ringförmigen Spalt 11 ein, wenn die metallisierte Folie 1 geöffnet ist.

Im Rahmen des erfindungsgemäßen Verfahrens kann vorgesehen sein, dass das Rohr 12 einen konstanten bzw. im Wesentlichen konstanten Innendurchmesser aufweist. Die in den Figuren 6 bis 9 dargestellte Kontur der Innenfläche des Rohres 12, bei der vorgesehen ist, dass die Innenfläche des Rohres 12 eine Ausnehmung 13 aufweist, an die sich die metallisierte Folie 1 anlegen kann, begünstigt ein Verschließen des ringförmigen Spaltes 11 durch die metallisierte Folie 1. Im Ausführungsbeispiel ist dabei vorgesehen, dass die Innenfläche des Rohrs 12 derart mit der Ausnehmung 13 versehen ist und das Rohr 12 derart bezüglich des Kabels 2 positioniert wird, dass aufgrund der Bernoulli-Regel ein dem Schneidwerkzeug 7 abgewandtes vorderes Ende der metallisierten Folie 1 in der Ausnehmung 13 anliegt, wenn das Gebläse in einer Öffnungsphase die Luft einbläst.

In nicht näher dargestellter Weise kann alternativ oder ergänzend im Ausführungsbeispiel auch vorgesehen sein, dass in dem Rohr 12 Öffnungen vorhanden sind, durch die Luft nach außen gesaugt wird, um die metallisierte Folie 1 an die Innenfläche des Rohrs 12 anzusaugen.

Nach der Öffnungsphase liegt, wie beschrieben, die metallisierte Folie 1 an der Innenfläche des Rohres 12 an, so wie dies in der Figur 7 dargestellt ist. Eine vergrößerte Ausschnittsdarstellung hierzu ist in Figur 8 dargestellt.

Erfindungsgemäß ist vorgesehen, dass nach der Öffnungsphase in einer Schnittphase, um die metallisierte Folie 1 durch die Schneiden 8 des Schneidwerkzeugs 7 einzuschneiden, Luft in Richtung auf das Schneidwerkzeug 7 mit Überdruck in das Rohr eingeblasen wird. Vorzugsweise wird in der Schnittphase zur Erzeugung des Überdrucks ein Druckstoß in das Rohr 12 eingeleitet. Durch den Überdruck bzw. den Druckstoß erhöht sich der Druck innerhalb der metallisierten Folie 1 so stark, dass die Schneiden 8 eine definierte Risskante erzeugen und die Folie 1 entfernt wird. Dies ist in Figur 10 prinzipmäßig dargestellt.

Von Vorteil ist es, wenn die Gasführung 12 in der Schnittphase, während das Gas mit Überdruck in die Gasführung 12 eingeblasen wird, so wie dies in Figur 9 dargestellt ist, von dem Schneidwerkzeug 7 wegbewegt wird. Dies ist in Figur 9 durch den Pfeil X dargestellt. Vorzugsweise wird die Gasführung 12 so weit von dem Schneidwerkzeug 7 wegbewegt, dass die metallisierte Folie 1 nicht mehr radial von der Gasführung 12 umgeben ist. Ein vollständiges Abziehen ist jedoch zur Verbesserung des Schnittprozesses nicht notwendig, es hat sich bereits als vorteilhaft herausgestellt, wenn die Gasführung 12 so weit in Pfeilrichtung X bewegt wird, dass der Abstand zwischen der Schneidwerkzeug 7 und dem vorderen Ende der Gasführung 12 vergrößert wird, so dass die metallisierte Folie 1 mehr Raum hat, um radial aufgeblasen zu werden.

Insofern die Gasführung 12 von der metallisierten Folie 1 in Pfeilrichtung X abgezogen wird, umfasst die Gasführung 12, abweichend von der Darstellung in Figur 10, die metallisierte Folie 1 nicht mehr.

Es sei darauf hingewiesen, dass es grundsätzlich im Rahmen des erfindungsgemäßen Verfahrens auch möglich ist auf die Öffnungsphase zu verzichten bzw. ein Übergang zwischen der Öffnungsphase und der Schnittphase fließend sein kann. Vorzugsweise ist vorgesehen, dass der Überdruck bzw. der Druckluftstoß wenigstens 5 bar, vorzugsweise wenigstens 7 bar, besonders bevorzugt wenigstens 10 bar, insbesondere 7 bis 12 bar und besonders bevorzugt 10 bis 12 bar beträgt.

Im Ausführungsbeispiel ist vorgesehen, dass der Überdruck in der Schnittphase höher ist als der Druck in der Öffnungsphase. Vorzugsweise ist der Überdruck wenigstens 1 bar, vorzugsweise wenigstens 2 bar höher als der Druck in der Öffnungsphase.

Im Rahmen des erfindungsgemäßen Verfahrens ist vorzugsweise vorgesehen, dass die Folie zunächst mit einem geringen Überdruck aufgeblasen wird und dann ein Druckstoß erfolgt der zu einem Aufplatzen der Folie führt.

Es kann im Rahmen des erfindungsgemäßen Verfahrens auch vorgesehen sein, dass in der Öffnungsphase ein Druck von 2 bis 7 Bar, vorzugsweise 3 bis 6 Bar zum Aufblasen verwendet wird und dann anschließend in der Schnittphase ein Überdruck von mindestens 7 Bar angelegt wird.

Unter dem Begriff "Überdruck" ist zu verstehen, dass der Druck höher ist als der Umgebungsdruck bzw. der Normaldruck (1 bar).

Es hat sich im Rahmen des erfindungsgemäßen Verfahrens gezeigt, dass es nicht zwingend notwendig ist, dass die Schneiden 8 in der Schnittphase die metallisierte Folie vollständig durchtrennen. Es kann bereits ausreichend sein, wenn eine Risskante erzeugt wird. Ein vollständiges Abreißen der metallisierten Folie 1 kann dann durch andere Maßnahmen erfolgen. Es kann insbesondere bereits ausreichend sein, dass die Schneiden 8 von dem Kabel 2 wegbewegt werden. Es hat sich gezeigt, dass die metallisierte Folie 1 derart an den Schneiden 8 anhaftet, dass die Bewegung der Schneiden 8 ausreichend ist um die metallisierte Folie 1 vollständig abzureißen.

Es hat sich als besonders geeignet herausgestellt, wenn die Schneiden 8 des Schneidwerkzeugs 7 vor der Schnittphase derart an die Außenfläche der metallisierten Folie 1 zugestellt werden, dass die Schneiden 8 an der metallisierten Folie 1 anliegen. Vorzugsweise wird das Kabel 2 dabei derart gedreht, dass die Position der Ausformungen 9 zu der Position der Leiter 3 passen.

Die vorstehende Beschreibung bezieht sich auf das Entfernen der metallisierten Folie 1, d. h. der Abschirmung der Leiter 3. Grundsätzlich ist es jedoch auch möglich das erfindungsgemäße Verfahren einzusetzen um das Schirmgeflecht 5 bzw. allgemein die Außenleiterabschirmung einzuschneiden bzw. zu entfernen.

## Patentansprüche

1. Verfahren zum Entfernen einer Abschirmung (1) eines Kabels (2), wonach ein Schneidwerkzeug (7) an eine Außenfläche der Abschirmung (1) in eine Schnittposition zugestellt wird,
**dadurch gekennzeichnet, dass**
ein gasförmiges Medium in das Kabel (2) eingeblasen wird, um die Abschirmung (1) mit einer radial nach außen wirkenden Kraft zu beaufschlagen derart, dass die Abschirmung (1) von wenigstens einer Schneide (8) des Schneidwerkzeugs (7) eingeschnitten wird.

2. Verfahren nach Anspruch 1,
**dadurch gekennzeichnet, dass**
das gasförmige Medium in einen Zwischenraum (10) radial innerhalb der Abschirmung (1) eingeblasen wird derart, dass das gasförmige Medium unmittelbar auf eine Innenfläche der Abschirmung (1) einwirkt.

3. Verfahren nach Anspruch 1 oder 2,
**dadurch gekennzeichnet, dass**
auf ein freies Ende des Kabels (2), an dem die Abschirmung (1) freigelegt ist, eine Gasführung (12) aufgebracht wird derart, dass die Gasführung (12) einen sich in axialer Richtung erstreckenden Abschnitt der freiliegenden Abschirmung (1) des Kabels (2) radial umgibt, wobei zwischen einer Innenfläche der Gasführung (12) und der Außenfläche der Abschirmung (1) ein vorzugsweise ringförmiger Spalt (11) verbleibt.

4. Verfahren nach Anspruch 3,
**dadurch gekennzeichnet, dass**
die Gasführung (12) derart positioniert wird, dass die Gasführung (12) das freie Ende des Kabels (2) radial umgibt und/oder ein vorderes auf das Kabel (2) aufgeschobenes Ende der Gasführung (12) benachbart zu dem Schneidwerkzeug (7) endet.

5. Verfahren nach einem der Ansprüche 3 oder 4,
**dadurch gekennzeichnet, dass**
die Abschirmung (1) in einer Öffnungsphase innerhalb der Gasführung (12) derart radial nach außen bewegt wird, dass wenigstens ein ringförmiger Abschnitt der Abschirmung (1) an einer Innenfläche der Gasführung (12) anliegt.

6. Verfahren nach Anspruch 5,
**dadurch gekennzeichnet, dass**
in der Öffnungsphase Gas derart in die Gasführung (12) eingeblasen wird, dass das Gas an dem freien Ende des Kabels (2) vorbei durch den ringförmigen Spalt (11) zwischen der Innenfläche der Gasführung (12) und der Außenfläche der Abschirmung (1) in Richtung auf das Schneidwerkzeug (7) strömt und/oder dass in der Gasführung (12) Öffnungen vorhanden sind, durch die Gas nach außen gesaugt wird, um die Abschirmung (1) an die Innenfläche der Gasführung (12) anzusaugen.

7. Verfahren nach einem der Ansprüche 5 oder 6,
**dadurch gekennzeichnet, dass**
nach der Öffnungsphase in einer Schnittphase, um die Abschirmung (1) durch die Schneide (8) des Schneidwerkzeugs (7) einzuschneiden, ein in Richtung auf das Schneidwerkzeug (7) strömendes Gas mit Überdruck in die Gasführung (12) eingeblasen wird.

8. Verfahren nach Anspruch 7,
**dadurch gekennzeichnet, dass**
in der Schnittphase zur Erzeugung des Überdrucks ein Druckstoß in die Gasführung (12) eingeleitet wird.

9. Verfahren nach Anspruch 7 oder 8,
**dadurch gekennzeichnet, dass**
die Gasführung (12) in der Schnittphase, während das Gas mit Überdruck in die Gasführung (12) eingeblasen wird, von dem Schneidwerkzeug (7) wegbewegt wird.

10. Verfahren nach einem der Ansprüche 1 bis 9,
**dadurch gekennzeichnet, dass**
das Kabel (2) wenigstens einen Leiter (3) oder wenigstens zwei Leiter (3) aufweist, und die Abschirmung (1) den oder die Leiter (3) umgibt.

11. Verfahren nach Anspruch 10,
**dadurch gekennzeichnet, dass**
das Kabel (2) zwei Leiter (3) aufweist, die von der Abschirmung (1) umgeben sind, wonach die zwei Leiter (3) vorzugsweise als differenzielles Signalleitungspaar, insbesondere als geseiltes differenzielles Signalleitungspaar, ausgebildet sind.

12. Verfahren nach einem der Ansprüche 10 oder 11,
**dadurch gekennzeichnet, dass**
das Schneidwerkzeug (7) Ausformungen (9) aufweist, um die Leiter (3) in der Schnittposition aufzunehmen, wonach um die Leiter (3) in die Ausformungen (9) des Schneidwerkzeugs (7) in der Schnittposition einzulegen, die axiale Position des Schneidwerkzeugs (7) und/oder die axiale Position des Kabels (2) angepasst wird und/oder das Schneidwerkzeug (7) und/oder das Kabel (2) rotiert wird.

13. Verfahren nach einem der Ansprüche 1 bis 12,
**dadurch gekennzeichnet, dass**
das Schneidwerkzeug (7) und das Kabel (2) derart zueinander positioniert werden, dass sich eine orthogonal durch die Mittelachsen der beiden Leiter (3) verlaufende Gerade orthogonal zu der Zustellbewegung des Schneidwerkzeugs (7) erstreckt.

14. Vorrichtung zum Entfernen einer freiliegenden Abschirmung (1) an einem Ende eines Kabels (2), aufweisend ein Schneidwerkzeug (7), welches zum Abschneiden der Abschirmung (1) an eine Außenfläche der Abschirmung (1) zustellbar ist,
**dadurch gekennzeichnet, dass**
eine Gasführung (12) vorgesehen ist, welche auf das Ende des Kabels (2), an dem die Abschirmung (1) freigelegt ist, aufbringbar ist, derart, dass die Gasführung (12) einen sich in axialer Richtung des Kabels (2) erstreckenden Abschnitt der freiliegenden Abschirmung (1) radial umgibt, wobei die Gasführung (12) derart gestaltet ist, dass zwischen der Innenfläche der Gasführung (12) und der Außenfläche der Abschirmung (1) ein ringförmiger Spalt (11) verbleibt, und wobei ein Gebläse vorgesehen ist, um ein gasförmiges Medium unterhalb der Abschirmung (1) einzublasen derart, dass die Abschirmung (1) mit einer radial nach außen wirkenden Kraft beaufschlagt wird derart, dass eine Schneide (8) des Schneidwerkzeugs (7) die nach außen gedrückte Abschirmung (1) einschneidet.

15. Vorrichtung nach Anspruch 14,
**dadurch gekennzeichnet, dass**
die Innenfläche der Gasführung (12) eine Ausnehmung (9) aufweist und die Gasführung (12) derart bezüglich des Kabels (2) positioniert wird, dass ein dem Schneidwerkzeug (7) abgewandtes vorderes Ende der Abschirmung (1) in der Ausnehmung (9) anliegt, wenn das Gebläse in einer Öffnungsphase das gasförmige Medium einbläst.
